Europäisches Patentamt

(19) European Patent Office

Office européen des brevets

(11) Publication number: **0 226 073**
**A1**

(12) **EUROPEAN PATENT APPLICATION**

(21) Application number: 86116231.1

(22) Date of filing: 22.11.86

(51) Int. Cl.⁴: **G 01 N 27/90**
**G 01 B 7/12**

(30) Priority: 25.11.85 SE 8505541

(43) Date of publication of application:
24.06.87 Bulletin 87/26

(84) Designated Contracting States:
AT CH DE FR GB LI

(71) Applicant: Törnblom, Bengt Hjalmar
Vikhus Rytterne
S-725 90 Västeras(SE)

(72) Inventor: Törnblom, Bengt Hjalmar
Vikhus Rytterne
S-725 90 Västeras(SE)

(74) Representative: Boecker, Joachim, Dr.-Ing.
Rathenauplatz 2-8
D-6000 Frankfurt a.M. 1(DE)

(54) Device for measuring and/or testing of objects.

㉗ Device for measuring and/or testing of test objects (1), for
example rolled wire, rods, tubes, round billets, etc., with respect to a variable or a combination of variables, for example
surface cracks (2), dimensional changes. The device com-
prises at least one transducer (3), which oscillates backwards
and forwards over the surface of the object by means of a
motor, the oscillation taking place in the form of a curved
path transversely of the longitudinal direction of the object.

EP 0 226 073 A1

Croydon Printing Company Ltd.

./...

FIG. 4

0226073    1986

Bengt Hjalmar Törnblom
S-725 90 Västeras / Sweden

Device for measuring and/or testing of objects

The invention relates to a device for measuring and/or testing of objects according to the precharacterising part of claim 1.

For measuring and testing of, for example, round material, as wire, rod and tubing, rotary surface transducers are often used. In those cases where the object to be tested is hot (e.g. + 900°C) and moves at a high velocity, as for example in the testing of rolled wire, it is necessary to rotate the transducers very fast while at the same time a large number of parallel-working transducer probes are required if, for example, a crack is to be detected with a relatively high reliability. Otherwise such a crack can easily pass undetected between the turns in this helically-formed scanning path.

A consequence of the velocity and the number of transducers is that it is very difficult, bulky and complicated to transmit signals as well as a medium, for example water, between the transducers and the associated electronic measuring and other equipment.

The invention aims at developing a device for measuring and/or testing of objects which allows to test fast moving objects with high reliability in a manner, rendering the device less expensive, less bulky and less sensitive to the environment.

To achieve this aim the invention suggests a device according to the introductory part of claim 1, which is characterized by the features of the characterizing part of claim 1.

Further developments of the invention are characterized by the features of the additional claims.

The device according to the invention is an alternative to the above-mentioned rotating surface transducers available on the market, which are expensive, bulky and very sensitive to the environment. The invention, which can be used for measuring and/or inspection, for example testing, of test objects with respect to a variable or a combination of variables, may be employed advantageously in connection with both plane and curved, for example round, surfaces as well as in connection with cold and hot materials. A special field of application is the testing of hot rolled wire where the advantages of the invention are obvious. The invention, which is generally applicable, is well suited for use in connection with so-called eddy current testing.

By "test object" is meant in this application, for example, a billet, a wire, a rod, a section, a sheet, etc.

By "variable" is meant, for example, a change in dimension, a surface imperfection, a surface crack or rupture, the edge of a billet, the position of a crack, the depth of a crack, etc. In other words, the term "variable" can be regarded as a very comprehensive concept.

By "guide means" is meant, for example, a bearing but also other arrangements or components which can guide the transducers in a suitable manner relative to the surface of the test object, and in particular parallel to the surface.

Inventions of a related kind are described in EP-A-86100002.4 and in SE-A-8503894-1. However, these inventions do not possess the advantages provided by the present invention, especially in the case of round materials with high velocities.

The invention will now be described in greater detail with reference to the accompanying drawings showing - by way of example - in

Figure 1 an embodiment of a device according to the invention in the direction of a wire to be tested,

Figure 2a and 2b courses of the scanning paths of a transducer included in the device,

Figure 3 scanning paths of three different transducers included in a device according to the invention,

Figure 4 a second embodiment of a device according to the invention with two sets of transducers perpendicular to a wire to be tested.

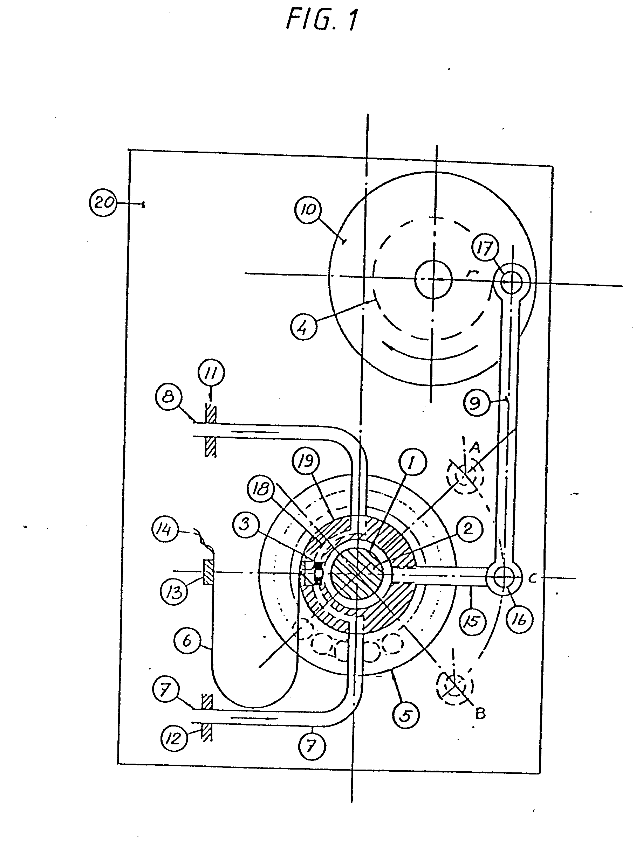

Figure 1 shows the cross-section of a test object 1 which in this case, for example, consists of a hot rod or wire. The rod contains a longitudinal surface crack 2, which is to be detected by the transducer 3 when it passes over the crack 2. In the base plate or stand 20 a ball bearing 5 is mounted. In the inner ring of the ball bearing 5 a cylindrical solid or body of revolution 19 is mounted. The body 19 is thus capable of rotating or oscillating because of the journalling in the ball bearing 5. At least one surface transducer 3 is mounted in the body 19. The transducer 3 is cooled via the water channels 18 which are connected to flexible water conductors 7, 8 which, for example, consist of polyurethane hose which possesses excellent fatigue properties. The transducers 3 are connected to an associated electronic unit via the flexible signal conductors 6 which, for example, consist of multi-pole electrical conductors of strips of metallic foil. Both the flexible cooling medium conductors and the flexible signal conductors are anchored to the base plate 20 via supports 11, 12, 13 fixed to the base plate 20. This allows the body 19 to be rotated back and forth to a certain extent without the flexible conductors being destroyed. At the same time, the transducers 3 will move at a largely constant distance to the surface of the test object 1. A motor 4 is mounted on the base plate 20. On the motor shaft a wheel 10 is mounted, on which, in turn, a bearing journal 17 is eccentrically positioned. In similar manner, a bearing journal 16 is mounted on an arm 15 connected to the body 19. By connecting the bearing journals 16, 17 to a crank arm 9, the body 19 will perform a rotational oscillation transversely of the longitudinal direction of the test object 1 when the motor wheel 10 is rotating. In Figure 1 this is illustrated by means of the dashed positions A and B, which indicate the extreme positions of the oscillating body 19, whereas position C indicates the centre position. The radial position of the bearing journal 17 on the motor wheel 10 is adjusted so as to obtain a suitable oscillation amplitude A-B, suitably of $90^{\circ}$.

In Figure 1, only one surface transducer is shown, which is to be considered as an extreme case. The invention is primarily designed for at least two transducers, since this makes the oscillation amplitude considerably easier to handle. Thus, the invention permits the use of a greater number of transducers, for example four, which are then suitably evenly distributed along the periphery of the test object. In this way, the oscillation amplitude can be restricted in a simple manner, which is advantageous in view of fatigue effects and the like. The larger the number of transducers, the smaller can be the oscillation amplitude and the faster the oscillation. Tests have shown that it is entirely possible to work with oscillation frequencies greater than 50 Hz provided that the body 19 has a small mass. Especially in the case of greater oscillation amplitudes, for example +/- 45$^O$, it is important for the flexible conductors to be arranged in an optimum manner, for example that they are relieved and connected so as to obtain the smallest possible movement.

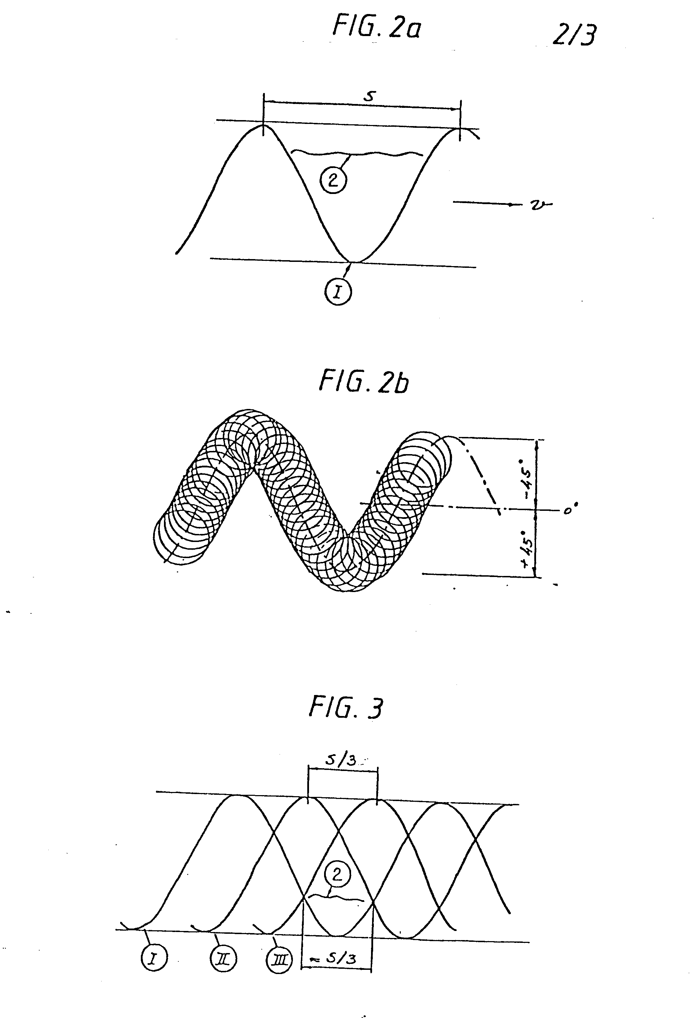

In the case of a relative movement between the transducers and the test object, for example when the text object, the rolled wire 1, moves at a velocity of v m/s, the oscillation will cause the respective transducer to move in a path over the test object according to Figure 2a. This path is suitably referred to as a surface scanning pattern. In the worst case, the crack 2, which has a length of less than S, may pass undiscovered because it is not crossed by the scanning pattern if it is unfavourably located on the test object. In other words, in the worst case an undetected crack can have a length of S.

In Figure 2b the transducer probe has been rotated, whereby the rotation pattern has become superposed on the oscillation pattern according to Figure 2a. Also, in this case the fact that the oscillating velocity in the transverse direction becomes near zero at the peaks is less important, that is ,superposed rotation "takes over" if the transversal velocity is too small.

In order to improve this situation, a number of n transducers may be allowed to oscillate in such a way that their patterns form, relative to each other, "phase-displaced" patterns of a more fine-meshed nature. This, of course, permits the detection of shorter cracks. Figure 3 shows such a pattern with n = 3 whereby the smallest detectable length of cracks is reduces to approximately S/n, that is, S/3 in the worst case. This is a considerable improvement in relation to Figure 2. In practice, this more fine-meshed scanning pattern may be obtained, for example, by

- locating three oscillating bodies in succession along the wire 1, the distance between the transducers 3 being adjusted to the velocity of the wire 1,

- oscillating the transducers 3 with mutually different phase positions,

- mounting the transducers 3 in the same body but being offset in phase in relation to each other, both in the peripheral direction and along the wire 1,

- combinations of the afore-said steps.

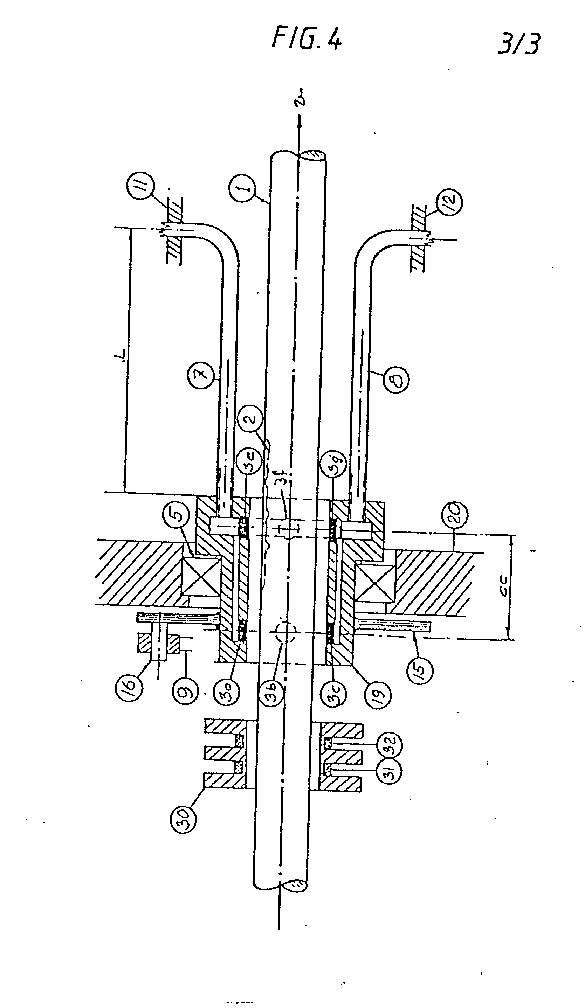

An attractive variant in practice is, for example, to divide the cross-section of the wire into four parts/quadrants and allow each one of four transducers to scan primarily its own quadrant periphery. To obtain a certain overlap, an oscillation amplitude of more than $360/4 = 90^{\circ}$, that is, $+/- 45^{\circ}$, is chosen. In other words, a suitable basic arrangement may consist of four transducers located spaced from each other by $90^{\circ}$ along the periphery of the test object and oscillating $\geq +/- 45^{\circ}$. Such an arrangement, among other things, is shown in Figure 4.

An oscillating frequency of 50 Hz corresponds to a period of 20 ms. If it is assumed that the test object consists of a rolled wire moving at a velocity of 10 m/s, that is, 10 mm/ms, which is a commonly occurring velocity in this connection, the distance/length S in Figure 2 will be 10 mm/ms x 20 ms = 200 mm. Thus, cracks shorter than 200 mm cannot be reliable detected.

It is, however, desirable to be able to detect cracks having a length of 100 mm at the velocity stated above. A relatively simple way of achieving this is to locate, as shown in Figure 4, additional transducers ($3_{e-h}$), which are displaced in the direction of the wire relative to the first transducers ($3_{a-d}$) by a distance (cc) which is adapted to the current rolled wire velocity, that is, in our case 10 mm/ms. In Figure 4 the transducers $3_d$ and $3_h$ are hidden behind the test wire 1.

This method can, of course, be extended to theoretically comprising an almost infinite number of mutually displaced transducers, rendering the scanning pattern very fine-meshed.

The doubling of the number of transducers here implies that the smallest detectable length of crack is 200/2 = 100 mm, which is sufficient for most applications. In the case of crack lengths of more than 100 mm, ordinary through transducers of a differential type often operate satisfactorily. This is the reason why the arrangement according to Figure 4 is supplemented by a through transducer 30 with associated differential windings, 31, 32, which theoretically enables the arrangement as a whole to detect the majority of cracks occurring.

The invention can be rendered more sophisticated by, for example, allowing the transducer 3 to be constituted by a probe which is allowed to rotate about a centre axis perpendicular to the surface of the test object. This will cause the circular movement of the transducer probe to become superposed on the oscillating movement, whereby the scanning pattern becomes more fully covering while at the same time the direction of movement of the transducer varies all the time. This results in the crack being almost always crossed by some scanning turn of the transducer. This is clear from Figure 2b.

In Figure 4 the transducers $3_{a-d}$ are located at a distance cc in relation to the transducers $3_{e-h}$. By adapting the distance cc to the velocity of the rolled wire, combined patterns, for example according to Figure 3, may be obtained. By forming the arrangement such that this distance cc can be adjusted in the case of a changed rolling speed, the transducer as a whole will be better adapted to the production. The same applies to the transducer probes which in the practical case are often made adjustable in the vertical direction, allowing the transducer to be used over a large dimensional range.

Figure 4 is also interesting in that the flexible conductors, for example the hoses 7, 8, are disposed along the longitudinal direction of the text object and have a large length (L) in relation to the oscillation amplitude. In this way, the bending of the conductors per unit of length is evenly distributed and limited, which is most advantageous from the point of view of strength. Numeral 15 in Figure 4 designates a simple disc.

The oscillating body 19 should, if possible, be made as small as circumstances permit to minimize the mechanical mass and the inertia, which reduces the mechanical stresses etc.

It should be pointed out that most of the imperfections of the original test object are successively rolled out in the rolling process so that, in the end, they will almost invariably have an orientation along the wire, which has been one of the starting-points of the invention.

In those cases where the test object is warm, ordinary water is a suitable cooling agent which is capable of cooling both mechanical parts and transducers, etc. without any major problems.

The degree figures stated in Figure 2b refer to the oscillation amplitude, and therefore, for example, Figures 2a, 2b and 3 may be regarded as scanning paths in the longitudinal direction of the rolled wire, in this case having a width of $90^{o}$.

In certain applications, for example during rolled wire testing, the ends of the rolled wire - and particularly the leading end - are often deformed and bent. This results in a tendency of the leading end to become wedged in the transducer, thus often destroying the latter. Since in most cases it is desired to have a narrow transducer passage to attain a high sensitivity in the measurement, this may be a considerable problem. Because of the simplicity provided by the invention in transmitting a medium such as air, water, oil, etc. via the flexible conductors, it is also possible to transmit an operating medium, such as compressed air. With the aid of this operating medium, the so-called lift-off of the transducer coils can then be varied, that is, when the leading end passes the transducer, the transducer is operated so that the distance between the normal path of the rolled wire and the transducer coils is temporarily increased, thus avoiding damage to the transducer.

By providing the drive means with a strong balance wheel, vibrations caused by the oscillation can be suppressed. If it is desirable to improve the vibration suppression further, the arrangement according to Figure 4 may, for example, be doubled and the bodies 19 be allowed to oscillate in opposition, that is, they oscillate in directions opposite to each other, thus obtaining a balanced design.

The invention also comprises those cases where the signal transmission takes place in some other manner than via the flexible conductors but where a medium of some kind is transmitted in accordance to the invention. The signal transmission may then, for example, be a contact-free inductive transmission whereas the cooling water is transmitted via hoses, as is clear from Figure 4.

As a consequence of the simplicity of transmitting signals, it is also possible to transmit, in a simple manner, for example current for feeding motors and the like mounted on the body 19. The motors may, for example, be intended for rotating the transducer probes so as to obtain the previously mentioned rotational movement superposed on the oscillating movement.

The invention also comprises those cases where, for example the crank device of Figure 1 is replaced by an eccentric device or the like.

It should also be clarified that the term variable in certain cases also relates to a combination of variables.

The invention is primarily to be regarded as a device but in the second place also a method is comprised.

It should also be pointed out that the oscillating body 19 within the scope of the invention may consist of several sections, whereby the passage for the test object can be adapted to varying test object dimensions.

The present invention may, of course, be varied in many ways within the scope of the following claims.

# C L A I M S

1. Device for measuring and/or testing of test objects (1), for example rolled wire, rods, tubes, round billets, etc., with respect to a variable or a combination of variables, for example surface cracks (2), dimensional changes, etc., which device comprises at least one transducer or sensor (3), for example an eddy current based surface transducer, and at least one drive means, for example a motor (4), directly or indirectly associated with said transducer by means of which said at least one transducer or sensor is caused to oscillate, for example back and forth, c h a r a c t e r i z e d in that the oscillation is performed in a curved path which is oriented substantially transversely of the longitudinal direction and/or direction of movement of the test object, and which largely follows the surface of the test object, for example parallel to the surface at a suitable measuring distance.

2. Device according to claim 1, c h a r a c t e r i z e d in that signal transmission and/or medium transmission to and/or from said at least one transducer is performed via at least one flexible conductor, for example an electrical conductor of strips of metallic foil (6) and/or a polyurethane hose (7, 8).

3. Device according to claim 1 or 2, c h a r a c t e r i z e d in that at least one of the flexible conductors is connected to transducers or a transducer arrangement in a direction which largely coincides with the longitudinal direction and/or direction of movement of the test object.

4. Device according to any of the preceding claims, c h a r a c t e r i z e d in that the surface of the test object can be considered to be divided into parallel, longitudinal scanning areas overlapping each other in the lateral direction, with one or more transducers belonging to each respective area.

5. Device according to any of the preceding claims, c h a r a c t e r i z e d in that at least one transducer is caused to oscillate over the surface of the test object at a suitable distance with the aid of at least one guide means/bearing, for example a ball bearing, a guide rail, a contour template, a profile template or the like, which is adapted to the shape, for example the cross-sectional contour, of the test object.

6. Device according to any of the preceding claims, c h a r a c t e r i z e d in that at least two transducers (3a-3e) are displaced (cc) in relation to each other along the direction of movement of the test object (Figure 4).

7. Device according to any of the preceding claims, c h a r a c t e r i z e d in that at least two transducers (3a-3b) are displaced, for example $90^{o}$, in relation to each other in the direction of oscillation.

8. Device according to any of the preceding claims, c h a r a c t e r i z e d in that at least one transducer rotates in a circular path or the like, which is superimposed on the oscillating movement.

9. Device according to any of the preceding claims, c h a r a c t e r i z e d in that at least one transducer is cooled with some form of cooling agent, for example water.

10. Device according to any of the preceding claims, c h a r a c t e r i z e d in that the drive means comprises at least one motor, for example an electric motor, an air motor, a stepping motor or the like with an associated crank device or eccentric device (9, 10).

11. Device according to any of the preceding claims, c h a r a c t e r i z e d in that at least two of the transducers, at respective times, completely or partially oscillate over different parts of the surface of the test object, and that the transducers are arranged in such a way in relation to the test object or the movement path of the test object that their surface scanning patterns, in combination with the movement of the test object in relation to the transducer arrangement, completely or for the most part jointly form patterns which permit measurement and/or testing, for example detection, of at least one variable or combination of variables, for example detection of longitudinal surface cracks whose lengths exceed a certain limit value.

12. Device according to any of the preceding claims, c h a r a c t e r i z e d in that a medium for operation, for example compressed air, is transmitted to the oscillating part (19) via flexible conductors, for example for adjusting the distance of a transducer (3) to the surface of the test object.

FIG. 1

*FIG. 2a*

*FIG. 2b*

*FIG. 3*

FIG. 4

**European Patent Office**

**EUROPEAN SEARCH REPORT**

Application number

EP 86 11 6231

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 342 498 (F. FÖRSTER) <br><br> * Whole document * | 1,4-6, 10,11 | G 01 N 27/90 <br> G 01 B 7/12 |
| Y | | 2,3,7- 9,12 | |
| D,Y | EP-A-0 189 742 (TÖRNBLOMS KVALITETSKONTROLL AB) <br> * Whole document * | 2,3,8, 9,12 | |
| Y | US-A-4 218 651 (L.H. IVY) <br> * Figures 2,4,7,8,10,11; column 3, line 35 - column 13, line 2 * | 7 | |
| A | | 1-12 | **TECHNICAL FIELDS SEARCHED (Int. Cl.4)** |
| A | GB-A-2 014 317 (NIPPON KOKAN K.K.) <br> * Whole document * | 1,3,4, 6-12 | G 01 N 27/00 <br> G 01 B 7/00 |
| A | US-A-3 612 987 (E.A. PLACKE et al.) <br><br> * Figures.; column 1, line 27 - column 2, line 30; column 3, line 12 - column 9, line 8 * | 1,3,4, 6-8,10 -12 | |

-/-

The present search report has been drawn up for all claims

| Place of search | Date of completion of the search | Examiner |
|---|---|---|
| THE HAGUE | 10-03-1987 | BROCK T.J. |

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENTS ABSTRACTS OF JAPAN, vol. 7, no. 156 (P-209)[1301], 8th July 1983; & JP-A-58 66 050 (SHIMAZU SEISAKUSHO K.K.) 20-04-1983 | 1,4,5, 8-11 | |

-----

TECHNICAL FIELDS SEARCHED (Int. Cl.4)

The present search report has been drawn up for all claims

| Place of search | Date of completion of the search | Examiner |
|---|---|---|
| THE HAGUE | 10-03-1987 | BROCK T.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82